## Europäisches Patentamt
## European Patent Office
## Office européen des brevets

(11) Veröffentlichungsnummer: **0 061 169**
**B1**

(12) ## EUROPÄISCHE PATENTSCHRIFT

(45) Veröffentlichungstag der Patentschrift:
**03.07.85**

(51) Int. Cl.⁴: **C 02 F 1/58,** C 02 F 1/28 //
B01D37/02, B01D21/01

(21) Anmeldenummer: **82102267.0**

(22) Anmeldetag: **19.03.82**

(54) **Verfahren zur Entfernung von anionischen Verbindungen aus Wasser.**

(30) Priorität: **25.03.81 DE 3111615**

(43) Veröffentlichungstag der Anmeldung:
**29.09.82 Patentblatt 82/39**

(45) Bekanntmachung des Hinweises auf die Patenterteilung:
**03.07.85 Patentblatt 85/27**

(84) Benannte Vertragsstaaten:
**AT BE CH DE FR GB IT LI NL SE**

(56) Entgegenhaltungen:
**DE - A - 1 642 417**
**DE - A - 2 418 979**
**DE - A - 2 552 457**
**DE - A - 2 726 192**
**DE - B - 2 503 169**

(73) Patentinhaber: **BASF Aktiengesellschaft,
Carl-Bosch-Strasse 38, D-6700 Ludwigshafen (DE)**

(72) Erfinder: **Degen, Hans-Juergen, Dr., Schillerstrasse 6,
D-6143 Lorsch (DE)**
Erfinder: **Guender, Wolf, Dr., Walter-Bruch-Strasse 25,
D-6730 Neustadt (DE)**
Erfinder: **Linhart, Friedrich, Dr.,
Richard-Kuhn-Strasse 37, D-6900 Heidelberg (DE)**
Erfinder: **Auhorn, Werner, Albrecht-Duerer-Ring 34E,
D-6710 Frankenthal (DE)**
Erfinder: **Frey, Guenter, Dr., Mainstrasse 13,
D-6701 Dannstadt-Schauernheim (DE)**
Erfinder: **Streit, Werner, Dr., im Woogtal 11,
D-6719 Bobenheim (DE)**
Erfinder: **Fikentscher, Rolf, Dr., Von-Stephan-Strasse 27,
D-6700 Ludwigshafen (DE)**

## Beschreibung

Aus der DE-AS 25 03 169 ist ein Verfahren zum Entfärben von wasserlösliche anionische organische Farbstoffe enthaltenden wässrigen Lösungen, wie Abwasser, bekannt, bei dem man die wasserlöslichen Farbstoffe durch Zusatz von wasserlöslichen kationischen oder ampholytischen Polymerisaten, die gegebenenfalls quaterniert sein können, ausfällt. Bei diesen Polymerisaten handelt es sich um Aminoalkylester der Acrylsäure und Methacrylsäure und um Copolymerisate dieser Monomeren mit anionischen Monomeren, wie ethylenisch ungesättigten Carbonsäuren und α,β-ungesättigten Sulfonsäuren sowie um Acrylamid und/oder Methacrylamid. Ausser den wasserlöslichen Polymerisaten können gegebenenfalls weitere Hilfsstoffe, z.B. anorganische Koagulationsmittel sowie anorganische und organische Adsorptionsmittel verwendet werden.

Aus Wochenblatt für Papierfabrikation 15, 559 bis 561 (1974) ist bekannt, in Wasser gelöste Papierfarbstoffe durch Behandlung mit Bentonit und Polyacrylamid und gegebenenfalls zusätzlich noch Aluminiumsulfat durch Ausfällen zu entfernen. Nach diesem Verfahren werden zwar basische Farbstoffe mit wenigen Ausnahmen nahezu vollständig aus dem Abwasser bzw. einer wässrigen Lösung entfernt, jedoch gelingt es nicht, auf diese Weise saure Farbstoffe aus wässrigen Lösungen zu fällen.

Der Erfindung liegt die Aufgabe zugrunde, ein Verfahren zur Entfernung von anionischen Verbindungen aus Wasser, das bei Fabrikationsprozessen im Kreislauf geführt wird, und aus Abwässern durch Zusatz von kationischen polymeren Hilfsmitteln unter Bildung und Ausflockung von wasserunlöslichen Reaktionsprodukten zur Verfügung zu stellen, wobei dieses Verfahren nicht nur für eine bestimmte Farbstoffklasse sondern allgemein für wasserlösliche anionische Verbindungen anwendbar sein soll und bessere Ergebnisse liefert als die bekannten Verfahren.

Die Aufgabe wird erfindungsgemäss dadurch gelöst, dass man als kationische polymere Hilfsmittel wasserlösliche Umsetzungsprodukte verwendet, die durch Reaktion von Benzylchlorid oder Styroloxid mit einem Polyelektrolyten aus der Gruppe Polyethylenimin, Polyvinylaminen oder Reaktionsprodukten aus Ammoniak oder Aminen und 1,2-Dichlorethan, Epichlorhydrin, Dichlorhydrinether oder Chlorhydrinether von mindestens zweiwertigen Alkoholen erhältlich und bei denen mindestens 10% der Aminoalkylgruppen des kationischen Polyelektrolyten mit den einen aromatischen Substituenten enthaltenden Alkylierungsmitteln umgesetzt sind, und sie in Kombination mit mineralischen Adsorbentien und/oder einem Magnesium-, Aluminium- oder Eisensalz verwendet.

Bei vielen Fabrikationsprozessen, bei denen Wasser im Kreislauf geführt wird, reichern sich häufig anionische Verbindungen an, die in den meisten Fällen einen nachteiligen Einfluss auf den jeweiligen Fabrikationsprozess ausüben. So reichern sich z.B. bei der Herstellung von Papier im Kreislaufwasser der Papiermaschine anionische Verbindungen wie Huminsäuren, Ligninsulfonsäuren und oxidierte Polysaccharide, an. Diese Stoffe können sich dabei soweit ansammeln, dass sie die Wirksamkeit der üblicherweise bei der Papierherstellung verwendeten kationischen Hilfsmittel, wie z.B. Flockungsmittel, Entwässerungshilfsmittel und Retentionsmittel stark herabsetzen bzw. aufheben. Die nachteiligen Wirkungen dieser anionischen Verbindungen können jedoch weitgehend bzw. vollständig ausgeschaltet werden, wenn man die störenden anionischen Verbindungen aus dem Kreislaufwasser nach dem erfindungsgemässen Verfahren entfernt. Weitere anionische Verbindungen, die erfindungsgemäss aus wässrigem Medium entfernt werden, sind beispielsweise Carboxymethylcellulose, anionische Stärken, Farbstoffe und oxidierte Polysaccharide. Das erfindungsgemässe Verfahren ist ebenso anwendbar auf die Entfernung anionischer Verbindungen aus Abwässern, z.B. der oben genannten anionischen Verbindungen, Polysäuren, Phenol-Formaldehydharzen und Phenol- und Naphtholsulfonsäure-Formaldehydharzen. Besondere Bedeutung kommt jedoch der Entfernung von wasserlöslichen anionischen Farbstoffen aus Abwässern zu. Das erfindungsgemässe Verfahren hat daher nicht nur Bedeutung für die Papierindustrie sondern ebenso auch für diejenigen Betriebe, in denen gefärbte Abwässer anfallen, z.B. Färberei- und Gerbereibetriebe. Das erfindungsgemässe Verfahren kann ebenso auch in Kläranlagen zur Reinigung von Industrie- und Kommunalabwässern eingesetzt werden.

Das erfindungsgemässe Verfahren wird am Beispiel der Papierherstellung sowie der Herstellung gefärbter Papiere näher erläutert. Papiere werden sehr häufig mit sauren oder Direktfarbstoffen oder auch Mischungen der beiden genannten Farbstoffklassen gefärbt. Es handelt sich hierbei um anionische Farbstoffe.

Saure Farbstoffe sind beispielsweise im Color-Index, Band 1, 3. Auflage, The Society of Dyers and Colorists and American Association of Textile Chemists and Colorists, Seiten 1003–1560 angegeben. Einige typische saure Farbstoffe, die zum Färben von Papier besonders geeignet sind, sind beispielsweise die sauren Gelbfarbstoffe CI 13 065 und 47 035, die Orangefarbstoffe CI 13 090, CI 15 575 und CI 15 510 sowie die roten sauren Farbstoffe CI 45 380 und CI 15 620. Direktfarbstoffe sind im Color Index, Band 2, auf den Seiten 2007 bis 2477 angegeben. Typische Direktfarbstoffe, die zum Färben von Papier üblicherweise verwendet werden, sind die gelben Direktfarbstoffe CI 29 000, CI 24 895, CI 13 950, CI 29 025, CI 40 000, CI 40 001 und CI 24 890, die orangen Direktfarbstoffe CI 40 215, CI 40 265 und 29 156, die roten Direktfarbstoffe CI 29 175, CI 28 160, CI 22 120 und CI 25 410, die blauen Direktfarbstoffe CI 23 155 und CI 24 340 sowie der violette Direktfarbstoff CI 25 410.

Die kationischen Hilfsmittel, die für das erfindungsgemässe Verfahren verwendet werden, sind in Wasser löslich und werden durch Reaktion von Alkylierungsmitteln, die einen aromatischen Substituenten aufweisen, mit kationischen Polyelektrolyten hergestellt. Geeignete Alkylierungsmittel sind beispielsweise Benzylhalogenide, wie Benzylchlorid, Benzylbromid und Benzyljodid, Styroloxid, Chlormethylbiphenyle und Bischlormethylbiphenyle z.B. 4-Chlormethylbiphenyl und 4,4'-Bischlormethylbiphenyl und α-, bzw. β-Halogenmethylnaphthaline, z.B. α-Chlormethylnaphthalin, β-Chlormethylnaphthalin, α-Brommethylnaphthalin und β-Brommethylnaphthalin. Die aromatischen Substituenten der Alkylierungsmittel können ausser den genannten Gruppierungen weitere Substituenten tragen, z.B. $C_1$- bis $C_{12}$-Alkylgruppen, Chlor, Brom, Phenyl, p-Chlormethylphenyl, Hydroxymethyl und Chlormethyl. Vorzugsweise verwendet man als Alkylierungsmittel Benzylchlorid.

Als zweite Komponente für die Herstellung der kationischen Hilfsmittel können prinzipiell alle kationischen Polyelektrolyte verwendet werden. Vorzugsweise enthalten die kationischen Polyelektrolyte Aminoalkylgruppierungen. Beispiele für kationische Polyelektrolyte sind Polyethylenimine, die mindestens 5 Aminoalkylgruppen besitzen, Polyvinylamine und Vernetzungsprodukte von Ammoniak oder Aminen, insbesondere von Diaminen oder Oligoaminen mit 1,2-Dichlorethan, Epichlorhydrin, Dichlorhydrinether oder Chlorhydrinether von mindestens zweiwertigen Alkoholen. Dichlorhydrinether erhält man beispielsweise durch Umsetzung von 2 Mol Epichlorhydrin mit einem Mol Wasser. Chlorhydrinether von mindestens zweiwertigen Alkoholen leiten sich von Glykolen bzw. Polyolen ab, deren Molekulargewicht höchstens 300 beträgt und die durch Umsetzung von 1 bis 1,5 Mol Epichlorhydrin pro Mol OH-Gruppen im mehrwertigen Alkohol bzw. Polyglykol unter Säurekatalyse (z.B. $H_2SO_4$ oder $BF_3$) erhalten werden. Geeignete Diamine bzw. Oligoamine sind beispielsweise Ethylendiamin, Propylendiamin, Diethylentriamin, Dipropylentriamin, Triethylentetramin, Bis-Aminopropyl-ethylendiamin, Tetraethylenpentamin, Piperazin, Aminoethylpiperazin, Aminopropylpiperazin Diaminoethylpiperazin und Diaminopropylpiperazin. Die Viskosität der Vernetzungsprodukte von Ammoniak und den Diaminen bzw. Oligoaminen beträgt in 40%iger wässriger Lösung höchstens 40 000 mPas.

Polyvinylamine werden hergestellt, indem man beispielsweise Vinylformamid radikalisch polymerisiert und das Polymerisat im sauren Milieu verseift.

Weitere kationische Polyelektrolyte sind Carbonamid-Gruppen enthaltende Kondensationsprodukte, auf die Alkylenimineinheiten aufgepfropft sind. Es handelt sich bei dieser Substanzklasse in erster Linie um Polyamidoamine, die durch Umsetzung von Dicarbonsäuren mit 4 bis 10 Kohlenstoffatomen mit Polyalkylenpolyaminen erhalten werden, die 3 bis 10 basische Stickstoffatome im Molekül aufweisen. Geeignete Dicarbonsäuren sind beispielsweise Bernsteinsäure, Maleinsäure, Adipinsäure, Glutarsäure, Korksäure, Sebazinsäure oder Terephthalsäure. Für die Herstellung der Polyamide ist es auch möglich, Mischungen von Dicarbonsäuren zu verwenden, z.B. Mischungen aus Adipinsäure und Glutarsäure oder Maleinsäure und Adipinsäure. Vorzugsweise verwendet man Adipinsäure. Diese Carbonsäuren werden mit Polyalkylenpolyaminen oder Gemischen davon kondensiert, die 3 bis 10 basische Stickstoffatome im Molekül enthalten, z.B. Diethylentriamin, Triethylentetramin, Tetraethylenpentamin, Dipropylentriamin, Tripropylentetramin oder Dihexamethylentriamin. Die Amine können gegebenenfalls bis zu 10 Gew.-% eines Diamins, wie Ethylendiamin oder Hexamethylendiamin, enthalten. Die Kondensation der Dicarbonsäuren mit den Polyalkylenpolyaminen wird vorzugsweise in Substanz durchgeführt, kann jedoch auch in einem gegenüber diesen Substanzen inerten Lösungsmittel vorgenommen werden. Die Kondensation erfolgt in dem Temperaturbereich von 80 bis 200 °C. Das bei der Reaktion entstehende Wasser wird aus dem System abdestilliert. Die Kondensation kann auch in Gegenwart von Lactonen oder Lactamen von Carbonsäuren mit 5 bis 12 Kohlenstoffatomen vorgenommen werden. Diese Produkte werden in das Polyamidoamin eingebaut. Pro Mol Dicarbonsäure verwendet man 0,8 bis 1,4 Mol eines Polyalkylenpolyamins.

Carbonamidgruppen enthaltende Kondensationsprodukte werden auch durch Umsetzung von (Meth)Acrylester (die (Meth)Acrylsäureester leiten sich von einwertigen Alkoholen mit 1 bis 18, vorzugsweise 2 bis 8 Kohlenstoffatomen ab) mit Diaminen (die Diamine enthalten vorzugsweise 2 bis 6 Kohlenstoffatome), wie Ethylendiamin und Hexamethylendiamin, oder Oligoaminen, d.h. Polyalkylenpolyamine, die 3 bis 10 basische Stickstoffatome im Molekül enthalten, erhalten. Eine weitere Herstellmöglichkeit solcher Verbindungen besteht darin, Harnstoff mit Bis-Aminoethylmethylamin zu kondensieren.

Die genannten Carbonamidgruppen enthaltenden wasserlöslichen Kondensationsprodukte werden in verstärkter Weise kationisch modifiziert, indem man Alkylenimin-Einheiten einführt. Dies geschieht am einfachsten z.B. in der Weise, dass man auf die Kondensationsprodukte in Gegenwart von Lewis-Säuren, z.B. Bortrifluoridetherat oder Schwefelsäure, Alkylenimine, insbesondere Ethylenimin, aufpfropft. Bei der Pfropfungsreaktion verwendet man, bezogen auf 100 Gewichtsteile eines Carbonamidgruppen enthaltenden Kondensats 20 bis 400, vorzugsweise 50 bis 300 Gewichtsteile Ethylenimin. Produkte dieser Art sind beispielsweise aus der DE-AS 24 34 816 bekannt.

Alkylenimingruppen können auch durch Reaktion von Aminoalkylschwefelsäurehalbestern mit den Carbonamidgruppen enthaltenden Kondensaten im alkalischen pH-Bereich hergestellt werden. Eine Aminoethylierung der Carbonamidgruppen enthaltenden Kondensate ist beispielsweise möglich, indem man diese Produkte mit β-Aminoethylschwefelsäurehalbester zur Reaktion bringt.

Die kationischen Polyelektrolyte werden vollständig oder nur teilweise mit den Alkylierungsmitteln, die einen aromatischen Substituenten aufweisen, umgesetzt. Mindestens 10% der Aminoalkylgruppen des kationischen Polyelektrolyten sollen mit den einen aromatischen Substituenten enthaltenden Alkylierungsmitteln umgesetzt werden. Speziell bei den Umsetzungsprodukten aus Piperazinen und Epichlorhydrin beträgt nach einer teilweisen Quaternisierung der kationischen Polyelektrolyte der Anteil der quaternären Stickstoffatome im Polyelektrolyten vorzugsweise 30 bis 60%.

Besonders wirksame Hilfsmittel erhält man, wenn man die Umsetzungsprodukte aus Alkylierungsmitteln, die einen aromatischen Substituenten aufweisen, und den kationischen Polyelektrolyten in einer zweiten Stufe mit Cyanamid oder Dicyandiamid oder Mischungen aus Cyanamid und Dicyandiamid modifiziert. Pro 100 Gewichtsanteile eines teilweise alkylierten kationischen Polyelektrolyten verwendet man 1 bis 100, vorzugweise 5 bis 20 Gewichtsteile Cyanamid und/ oder Dicyandiamid. Die Umsetzung wird in wässriger Lösung bei Temperaturen in dem Bereich von 70 bis 100 °C vorgenommen.

Unter mineralischen Adsorbentien sollen feinteilige Mineralien verstanden werden, die eine grosse Oberfläche besitzen. Geeignete Stoffe dieser Art sind beispielsweise Alumosilikate, Kreide, Dolomit, Titandioxid, Bauxit und Satinweiss (Calcium-Sulfo-Aluminat). Geeignete Alumosilikate sind beispielsweise Talk und Kaolin. Besonders bevorzugt ist die Verwendung von Mineralien vom Typ der Montmorillonite wie z.B. Bentonit. Der Bentonit kann in natürlich vorkommender Form oder auch nach einer Aktivierung mit Säuren oder Basen eingesetzt werden.

Für diese Stoffe werden im Papiermacher Taschenbuch, Dr. Curt Haefner Verlag GmbH, 6900 Heidelberg (1980) unter dem Stichwort «Füllstoffe», S. 27, Tabelle 1, Teilchengrössen von 0,3 bis 5 μ angegeben. Es sind jedoch auch wesentlich grössere mineralische Adsorbentien geeignet, deren Teilchendurchmesser in trockenem Zustand z.B. zu mehr als 80% zwischen 0,2 bis 500 μ liegen kann. Bei quellfähigen mineralischen Adsorbentien z.B. vom Typ der Montmorillonite sind Teilchendurchmesser in feuchtem Zustand entscheidend. Zur Erreichung einer optimalen Oberfläche müssen die Mineralien während eines Quellungsvorganges starken Scherkräften ausgesetzt werden. Die mittlere Teilchengrösse in feuchtem Zustand soll vorzugsweise unter 50 μ, insbesondere unter 10 μ liegen.

Geeignete Magnesiumsalze sind beispielsweise Magnesiumsulfat und Magnesiumchlorid. Sofern es darum geht, saure Kreislaufwässer bzw. saure Abwässer zu reinigen, kann man auch Magnesiumoxid und Magnesiumcarbonat einsetzen. Von den Eisensalzen kommen Eisen-II- und Eisen-III-sulfat sowie Eisen-III-chlorid in Betracht. Von den Aluminiumsalzen verwendet man technisch vor allem Alaun und Aluminiumsulfat. Es ist auch möglich, Mischungen der genannten anorganischen Salze zu verwenden, z.B. Mischungen aus Eisen-III-sulfat und Aluminiumsulfat oder Mischungen aus Eisen-III-chlorid und Alaun oder Mischungen aus Magnesiumsulfat und Aluminiumsulfat. Die Mengen an eingesetzten Metallsalzen betragen 10 bis 1000 Gew.-%, vorzugsweise 20 bis 200 Gew.-%, bezogen auf das polymere kationische Hilfsmittel.

Anionische Verbindungen werden aus einem wässrigen System erfindungsgemäss dadurch entfernt, dass man sie mit einem einen aromatischen Substituenten enthaltenden kationischen polymeren Hilfsmittel in Mischung mit einem mineralischen Adsorbens und/oder einem Magnesium-, Aluminium- oder Eisensalz in Kontakt bringt. Hierfür ergeben sich verschiedene Möglichkeiten. Man kann einmal so vorgehen, dass man zunächst das polymere kationische Hilfsmittel zu dem Abwasser bzw. Kreislaufwasser zugibt, es kurze Zeit einwirken lässt und dann ein mineralisches Adsorbens und/oder eines der genannten Metallsalze hinzugibt. Ebenso ist es auch möglich, zunächst die Metallsalze zu dem Abwasser oder dem Kreislaufwasser zuzugeben und einwirken zu lassen und danach erst das kationische polymere Hilfsmittel zuzusetzen.

Eine bevorzugte Anwendungsmöglichkeit besteht darin, eine Mischung aus einem kationischen polymeren Hilfsmittel und einem mineralischen Adsorbens zu bereiten und diese dann dem zu behandelnden wässrigen System zuzufügen. In einer weiteren Ausgestaltung dieser Verfahrensweise kann dann zusätzlich noch ein Magnesium-, Aluminium- und/oder Eisensalz mit eingesetzt werden. Eine weitere Variante des erfindungsgemässen Verfahrens ist dadurch charakterisiert, dass man dem zu behandelnden Abwasser bzw. Kreislaufwasser zunächst ein mineralisches Adsorbens und gegebenenfalls ein Magnesium-, Eisen- und/oder Aluminiumsalz zusetzt und dann erst das kationische polymere Hilfsmittel zugibt. Gemäss einer weiteren Ausführungsform verwendet man das polymere kationische Hilfmittel zusammen mit Magnesium-, Aluminium- oder Eisensalzen.

Das polymere kationische Hilfsmittel wird in einer Menge eingesetzt, die etwa derjenigen Menge zu der entfernenden anionischen Verbindungen in dem wässrigen Medium entspricht. Die Mengen an anionischen Stoffen insbesondere bei gefärbten wässrigen Medien, z.B. von 1 mg Farbstoff pro Liter Wasser kommen ebenso in Frage wie grössere Mengen gefärbter und ungefärbter Stoffe. Vorzugsweise wird man das erfindungsgemässe Verfahren zur Entfernung von schwer erfassbaren Restmengen an anionischen Stoffen einsetzen. Der Einsatz ist jedoch in der Praxis lediglich durch die Wirtschaftlichkeit des Verfahrens beschränkt, das bei grösseren Mengen an anionischen Stoffen z.B. mit der biologischen Abwasserklärung oder der Abwasserverbrennung konkurriert, d.h. Mengen von etwa 0,1 mg/l bis etwa 10 g/l. Das Gewichtverhältnis von minerali-

schem Adsorbens zu dem polymeren kationischen Hilfsmittel beträgt etwa 20:1 bis 0,5:1 und liegt vorzugsweise in dem Bereich von 10:1 bis 3:1.

Bei der Einwirkung der polymeren kationischen Hilfsmittel, der mineralischen Adsorbentien und/oder der Metallsalze auf die anionischen in Wasser gelösten Verbindungen entstehen unlösliche Reaktionsprodukte, die ausfallen bzw. ausflocken. Um die Flockungsgeschwindigkeit bzw. die Geschwindigkeit der Abscheidung dieser sogenannten Verlackungsprodukte zu beschleunigen, setzt man die üblicherweise verwendeten Flockungsmittel in den bekannten Mengen zu. Solche Flockungsmittel sind beispielsweise nichtionische, anionische oder kationische Polyacrylamide eines hohen Molekulargewichts. Die kationische Modifizierung kann beispielsweise durch Umsetzung von hochmolekularem Polyacrylamid mit Formaldehyd und Dialkylaminen nach Art einer Mannich-Reaktion vorgenommen werden oder man copolymerisiert Acrylamid mit kationischen Monomeren, wie Dimethylaminoethylacrylat, Dimethylaminopropylacrylat, Dimethylaminobutylacrylat bzw. den entsprechenden Ester aus Aminoalkoholen und Methacrylsäure. Nichtionische Flockungsmittel sind z.B. Polyacrylamide, anionische Flockungsmittel leiten sich vor allem von Copolymerisaten des Acrylamids mit ethylenisch ungesättigten Carbonsäuren ab, z.B. Acrylsäure. Die Flockungsmittel werden, bezogen auf die auszuflockenden Verlackungsprodukte, in einer Menge von 0,1 bis 10 Gew.-%, vorzugsweise von 1 bis 5 Gew.-% eingesetzt. Bei der Herstellung von Papier ist es beispielsweise möglich, die Verlackungsprodukte im System zu belassen und sie in das Papier mit einzuarbeiten. Zu diesem Zweck setzt man beispielsweise dem Kreislaufwasser eins der in Betracht kommenden polymeren kationischen Hilfsmittel, ein mineralisches Adsorbens und/oder ein Magnesium-, Aluminium- oder Eisensalz zu und baut die Verlackungsprodukte beim Entwässern der Faserstoffsuspension in das Papier ein, indem man den Papierstoff auf einem Sieb entwässert.

Herstellung der kationischen Hilfsmittel

Hilfsmittel 1

In einem 1 I-Vierhalskolben, der mit Rührer, Rückflusskühler, Thermometer und Tropftrichter versehen war, wurden 259 g einer 49,9%igen wässrigen Lösung eines Polyethylenimins vom Molekulargewicht 1500 (Hilfsmittel 1a für Vergleichsbeispiel 4) vorgelegt und auf eine Temperatur von 80 bis 85 °C erwärmt. Man entfernte dann das Heizbad und tropfte innerhalb von 30 Minuten 114 g Benzylchlorid zu, wobei man einen Temperaturanstieg des Reaktionsgemisches auf 92 °C beobachtet. Danach gab man auf einmal eine Lösung 38 g Cyanamid in 38 g Wasser zu. Das Reaktionsgemisch wurde 5 Stunden bei einer Temperatur von 90 °C gehalten. Danach liess man es abkühlen und gab 101 g destilliertes Wasser zu. Man erhielt 562 g einer wässrigen Lösung eines teilweise benzylierten und mit Cyanamid modifizierten Polyethylenimins mit einem Feststoffgehalt von 51,1%.

Hilfsmittel 2

In einem 1 I-Vierhalskolben, der mit Rührer, Rückflusskühler, Thermometer und Tropftrichter versehen war, wurden 259 g einer 49,9%igen wässrigen Lösung eines Polyethylenimins vom Molekulargewicht 1500 vorgelegt und auf eine Temperatur von 85 °C erwärmt. Man tropfte dann innerhalb von 30 Minuten 114 g Benzylchlorid zu, wobei die Temperatur auf 93 °C anstieg. Nach beendeter Zugabe des Benzylchlorids wurde die Reaktionslösung noch 1/2 Stunde auf 90 °C erwärmt und mit 113 g destilliertem Wasser verdünnt. Man erhielt 486 g einer 50,3%igen wässrigen Lösung eines teilweise benzylierten Polyethylenimins.

Hilfsmittel 3

In einem 1 I-Vierhalskolben, der mit Rührer, Rückflusskühler, Thermometer und Tropftrichter versehen war, wurden 128 g technisches Piperazin und 65 ml destilliertes Wasser vorgelegt und auf eine Temperatur von 80 °C erwärmt. Dazu tropfte man dann unter Kühlung des Kolbens mit einem Eisbad innerhalb von einer Stunde 88 g Epichlorhydrin und hielt die Temperatur durch Kühlen auf 80 °C. Die Kondensationsdauer betrug 3 bis 4 Stunden. Man erhielt eine wässrige Lösung mit einer Viskosität von 4500 mPas (Hilfsmittel 3a für Vergleichsbeispiel 4).

Zu dieser Lösung gab man dann 183 g destilliertes Wasser und 80 g 50%ige wässrige Natronlauge. Bei einer Temperatur von 70 °C tropfte man dann innerhalb von 1 Stunde 126 g Benzylchlorid zu und rührte das Reaktionsgemisch noch 2 Stunden bei einer Temperatur von 80 °C. Die Reaktionslösung wurde auf eine Temperatur von 30 °C abgekühlt und unter Rühren mit 133 g destilliertem Wasser und 200 g 100%iger Ameisensäure versetzt. Man erhielt 999 g einer 20%igen wässrigen Lösung eines Piperazinharzes, deren Viskosität 33 mPas betrug. Der Chloridtiter lag bei 1,45 mVal/g, der pH-Wert betrug 1,8.

Hilfsmittel 4

Zunächst wurden ein Polyamidoamin hergestellt, indem man 1044 Teile Wasser und 2150 Teile Diethylentriamin unter Stickstoffatmosphäre bei Raumtemperatur miteinander mischte und dann unter Kühlen 2800 Teile Adipinsäure zusetzte. Das Reaktionsgemisch wurde erhitzt, so dass das Wasser, das ursprünglich zugesetzt wurde und das sich bei der Kondensation bildete, abdestillierte. Innerhalb von 5 Stunden wurde unter kontinuierlichem Abdestillieren des Wassers eine Sumpftemperatur von 170 °C erreicht. Diese Temperatur wurde so lange gehalten, bis das Harz eine Säurezahl von weniger als 10 hatte (ca. 10 Stunden bei 170 °C). Das Harz wurde abgekühlt und – sobald es eine Temperatur von 130 °C erreichte – mit 3100 Teilen Wasser versetzt. Man erhielt eine wässrige Lösung mit einem Feststoffgehalt von 61,4%.

Das so erhaltene Polyamidoamin wurde mit Ethylenimin gepfropft. Hierzu wurden 326 Teile des 61,4%igen Harzes mit 4,5 Teilen konzentrierter Schwefelsäure in 70 Teilen Wasser versetzt und auf eine Temperatur von 80 °C erwärmt. Innerhalb von 5 Stunden liess man unter guter Durchmischung 200 Teile einer 50%igen wässrigen Ethyleniminlösung zulaufen und hielt anschliessend die Temperatur des Reaktionsgemisches noch 2 bis 3 Stunden in dem Bereich von 80 bis 90 °C. Die Reaktion ist erst dann beendet, wenn mit p-Nitrobenzylpyridin kein Ethylenimin mehr nachweisbar ist. Man erhielt auf diese Weise eine 50,8%ige wässrige Lösung eines mit Ethylenimin gepfropften Polyamidoamins (Hilfsmittel 4a für Vergleichsbeispiel 4).

Das mit Ethylenimin modifizierte Polyamidoamin wurde benzyliert, indem man 192 Teile der 50,8%igen wässrigen Harzlösung mit 311 Teilen Wasser versetzte, auf 80 °C erwärmte und innerhalb einer halben Stunde mit 76 Teilen Benzylchlorid bei einer Temperatur in dem Bereich von 80 bis 90 °C zusammenbrachte. Nach beendeter Zugabe des Benzylchlorids wurde die Reaktionslösung noch 1 Stunde auf 90 °C erwärmt und danach abgekühlt. Man erhielt eine 30,1%ige wässrige Lösung eines benzylierten mit Ethylenimin gepfropften Polyamidoamins.

Hilfsmittel 5

In einem 1 l-Vierhalskolben, der mit Rührer, Rückflusskühler, Thermometer und Tropftrichter versehen war, wurden 256 g einer 50,4%igen wässrigen Lösung eines Polyethylenimins vom Molekulargewicht 430 (Hilfsmittel 5a für Vergleichsbeispiel 4) vorgelegt und auf eine Temperatur von 85 °C erwärmt. Nach Entfernen des Heizbades tropfte man 114 g Benzylchlorid zu der Vorlage, wobei die Temperatur auf 93 °C anstieg. Nach Beendigung der Benzylchloridzugabe wurde das Reaktionsgemisch noch eine halbe Stunde bei 90 °C gerührt und anschliessend mit 116 g destilliertem Wasser verdünnt und abgekühlt. Man erhielt 485 g eines teilweise benzylierten Polyethylenimins mit einem Feststoffgehalt von 50,1%.

Hilfsmittel 6

Nach der unter Hilfsmittel 5 gegebenen Vorschrift wurden 259 g einer 49,9%igen wässrigen Lösung eines Polyethylenimins vom Molekulargewicht 1500 mit 228 g Benzylchlorid alkyliert. Nach Beendigung der Alkylierungsreaktion setzte man dem Reaktionsgemisch 227 g destilliertes Wasser zu und erhielt 713 g eines teilweise benzylierten Polyethylenimins mit einem Feststoffgehalt von 49,6%.

Hilfsmittel 7

In einem 1 l-Vierhalskolben, der mit Rührer, Rückflusskühler, Thermometer und Tropftrichter versehen war, wurden 151 g einer 52,1%igen wässrigen Lösung von Polyethylenimin eines Molekualrgewichts von 258 (Hilfsmittel 7a für Vergleichsbeispiel 4) vorgelegt und auf eine Temperatur von 90 °C erwärmt. Das Heizbad wurde dann entfernt und das Reaktionsgemisch innerhalb von 20 Minuten mit 84 g Benzylchlorid versetzt, wobei die Temperatur aufgrund der exothermen Reaktion bei 90 °C gehalten wurde. Nach Zugabe des Benzylchlorids wurde die Reaktionslösung noch eine halbe Stunde auf 90 °C erhitzt. Anschliessend gab man eine Lösung von 21 g Cyanamid in 21 g destilliertem Wasser auf einmal zur Reaktionslösung und rührte das Gemisch 5 Stunden bei 90 °C. Danach verdünnte man die wässrige Lösung mit 89 g destilliertem Wasser und erhielt 366 g einer 50%igen wässrigen Lösung eines mit Benzylchlorid und Cyanamid modifizierten Polyethylenimins.

Hilfsmittel 8

In einem 2 l-Vierhalskolben, der mit Rührer, Rückflusskühler, Thermometer und einem Tropftrichter ausgestattet war, wurden 507 g einer 42,4%igen wässrigen Lösung eines Polyethylenimins vom Molekulargewicht 860 vorgelegt und auf eine Temperatur von 90 °C erwärmt. Nachdem die Vorlage auf eine Temperatur von 90 °C erhitzt worden war, gab man 300 g Styroloxid innerhalb von 3 Stunden unter guter Durchmischung zu. Die Reaktionslösung wurde nach Zugabe des Styroloxids noch eine Stunde auf 90 °C erhitzt, dann abgekühlt und mit 223 g destilliertem Wasser versetzt. Man erhielt 1028 g einer 50,2%igen wässrigen Lösung eines mit Styroloxid modifizierten Polyethylenimins.

Hilfsmittel 9 (gemäss Stand der Technik)

In einem 1 l-Vierhalskolben, der mit Rührer, Rückflusskühler, Thermometer und Gaseinleitungsrohr versehen war, wurden 267 g eines 48,3%igen Polyethylenimins vom Molekulargewicht 860 auf eine Temperatur von 85 °C erwärmt. Danach leitete man 53 g Ethylenoxid bei 85 °C innerhalb von 4 Stunden in die Lösung ein und rührte nach beendeter Ethylenoxidzugabe das Gemisch noch eine Stunde bei einer Temperatur von 85 °C. Die Lösung wurde mit 44 g destilliertem Wasser verdünnt. Man erhielt 364 g einer 50%igen wässrigen Lösung eines mit Ethylenoxid teilweise modifizierten Polyethylenimins.

Hilfsmittel 10 (gemäss Stand der Technik)

In einem 1 l-Vierhalskolben, der mit Rührer, Rückflusskühler, Thermometer und einem Tropftrichter ausgestattet war, wurden 259 g einer 49,9%igen wässrigen Lösung eines Polyethylenimins vom Molekulargewicht 1500 vorgelegt und auf 30 °C erwärmt. Nach Erreichen dieser Temperatur setzte man innerhalb von 2 Stunden 378 g Dimethylsulfat tropfenweise zu, so dass eine Temperatur von 50 °C nicht überschritten wurde. Nach Zugabe des Dimethylsulfats rührte man das Reaktionsgemisch noch 1 Stunde bei einer Temperatur von 50 °C und erhitzte es dann noch eine halbe Stunde lang auf 80 °C. Man erhielt 630 g einer wässrigen Lösung eines mit Dimethylsulfat modifizierten Polyethylenimins.

Hilfsmittel 11 (gemäss Stand der Technik)

In einem 2 l-Vierhalskolben, der mit Rührer, Rückflusskühler, Thermometer und Tropftrichter ausgestattet war, wurden 202 g einer 49,9%igen wässrigen Lösung eines Polyethylenimins vom Molekulargewicht 1500 vorgelegt und unter Rühren auf 45 °C erwärmt. Innerhalb von 2 Stunden tropfte man unter Rühren 266 g Dimethylsulfat teilweise unter Kühlung so zu, dass die Reaktionstemperatur 45 bis 50 °C betrug. Danach wurde die Mischung neutralisiert, indem man 174 g einer 48,5%igen wässrigen Natronlauge zutropfte. Die Reaktionsmischung wurde auf 90 °C erwärmt und bei dieser Temperatur mit 324 g Dimethylsulfat unter den gleichen Bedingungen wie oben beschrieben versetzt. Das überschüssige Dimethylsulfat wurde mit 19 g 48,5%iger wässriger Natronlauge neutralisiert. Die Mischung wurde danach weitere 3 Stunden auf 90 °C erhitzt. Man erhielt 984 g einer wässrigen Lösung eines mit Dimethylsulfat quaternisierten Polyethylenimins.

Hilfsmittel 12

In einem 4 l-Vierhalskolben, der mit Rührer, Rückflusskühler, Thermometer und Tropfentrichter ausgestattet war, wurden 623 g Aminoethylpiperazin und 718 g destilliertes Wasser vorgelegt und auf 80 °C erhitzt. Bei dieser Temperatur tropfte man unter Kühlung innerhalb von 3 Stunden 444 g Epichlorhydrin zu und hielt danach die Reaktionstemperatur noch 4 Stunden in dem Bereich von 80 bis 85 °C bis der Chloridtiter 2,68 mVal/g betrug (Hilfsmittel 12a für Vergleichsbeispiel 4).

Zu 369 g des Aminoalkylpiperazin-Epichlorhydrinharzes (43,9% Wirksubstanz) gab man 210 g destilliertes Wasser und 80 g 50%ige wässrige Natronlauge. Sodann tropfte man innerhalb von 1 Stunde bei einer Temperatur von 80 °C 126 g Benzylchlorid zu und rührte das Reaktionsgemisch anschliessend noch 2 Stunden bei einer Temperatur von 90 °C. Der Chloridtiter betrug 2,77 mVal/g. Die Reaktionslösung wurde mit 437 g destilliertem Wasser und 420 g 100%iger Ameisensäure versetzt. Sie hatte einen pH-Wert von 2,66 und enthielt 20% Wirksubstanz.

Hilfsmittel 13

In einem 2 l-Vierhalskolben, der mit Rührer, Rückflusskühler, Thermometer und einem Tropftrichter ausgestattet war, wurden 349 g N,N'-Bis-(3-aminopropyl)-ethylendiamin und 497 g destilliertes Wasser vorgelegt und auf 80 °C erwärmt. Innerhalb von einer Stunde gab man tropfenweise 148 Epichlorhydrin zu und hielt die Reaktionstemperatur durch Kühlen des Kolbens in dem Bereich zwischen 80 und 85 °C. Der Chloridtiter lag bei 1,66 mVal/g. Zu dieser Lösung tropfte man dann innerhalb von einer Stunde 508 g Benzylchlorid bei 80 °C unter Kühlung zu und liess die Mischung 2 Stunden bei 80 °C nachreagieren. Man erhielt 1502 g einer wässrigen Lösung eines Harzes mit einem Wirksubstanzgehalt von 66,7%. Der Chloridtiter betrug 3,77 mVal/g.

Hilfsmittel 14

750 g des 66,7%igen Hilfsmittels 13 wurden in einem 1 l-Vierhalskolben bei einer Temperatur von 90 °C mit einer Lösung von 50 g Cyanamid in 50 g destilliertem Wasser zur Reaktion gebracht. Die Umsetzung war nach 5 Stunden bei 90 °C beendet. Man gab dann 218 g destilliertes Wasser zu und erhielt 1068 g einer 49,9%igen wässrigen Lösung eines mit Cyanamid modifizierten benzylierten Amin-Epichlorhydrinharzes.

Hilfsmittel 15

In einem 2L-Vierhalskolben, der mit Rührer, Rückflusskühler, Thermometer und Tropftrichter versehen war, wurden 378 g Tetraethylenpentamin und 581 g destilliertes Wasser vorgelegt und auf 80 °C erwärmt. Bei dieser Temperatur tropfte man innerhalb einer halben Stunde 203 g Dichlorhydrinether unter Kühlung zu und liess den Ansatz 13 Stunden bei 80 °C abreagieren. Der Chloridtiter betrug 1,76 mVal/g. Zu dieser Lösung tropfte man dann innerhalb von 1 Stunde unter Kühlung 630 g Benzylchlorid und hielt die Reaktionstemperatur noch 6 Stunden bei 80 °C. Der Chloridtiter betrug nach Beendigung der Reaktion 3,92 mVal/g. Man erhielt 1790 g einer 66,1%igen wässrigen Lösung des kationischen Hilfsmittels 15.

Hilfsmittel 16

896 g des kationischen Hilfsmittels 15 wurden in einem 2 l-Vierhalskolben, der mit Rührer, Rückflusskühler, Thermometer und Tropftrichter ausgestattet war, auf 90 °C erwärmt und auf einmal mit einer Lösung von 63 g Cyanamid in 63 g destilliertem Wasser versetzt. Das Reaktionsgemisch wurde 5 Stunden auf 90 °C erhitzt und anschliessend mit 327 g destilliertem Wasser versetzt. Man erhielt 1349 g einer 50%igen wässrigen Lösung eines kationischen Hilfsmittels.

Die Erfindung wird in den folgenden Beispielen zunächst anhand von Versuchen demonstriert, bei denen anionische Farbstoffe aus wässriger Lösung entfernt werden und anschliessend Störstoffe entfernt werden, die üblicherweise die Wirksamkeit von Retentions-, Flockungs- und Entwässerungshilfsmitteln beeinträchtigen.

Beispiel 1

a) Zu einer Lösung von 30 mg des sauren Orangefarbstoffs CI 15 510 in einem Liter destilliertem Wasser gab man 300 mg eines handelsüblichen alkalisch aktivierten Bentonits, setzte 100 mg des Hilfsmittels 1 zu und gab anschliessend 100 mg Aluminiumsulfat ($Al_2(SO_4)_3 \cdot 18\ H_2O$) zu. Nach 10minütigem Stehen wurden die festen Anteile durch Filtrieren abgetrennt und der Restgehalt an Farbstoff in der wässrigen Lösung colormetrisch bestimmt. Es befanden sich 6% des eingesetzten Farbstoffs im Filtrat.

b) Um eine raschere Sedimentation der Verlakkungsprodukte zu erreichen, wurde die so erhaltene Suspension mit 5 mg eines handelsüblichen hochmolelularen kationischen Polyacrylamids versetzt. Bereits nach 5minütigem Stehen bildeten sich grosse, gut filtrierbare Flocken.

Beispiel 2

a) Zu einer Lösung von 30 mg des sauren Orangefarbstoffs Cl 15 510 in einem Liter destilliertem Wasser gab man 500 mg eines handelsüblichen alkalisch aktivierten Bentonits und setzte anschliessend 100 mg des Hilfsmittels 1 zu. Nach 10minütigem Stehen wurden die Verlackungsprodukte abfiltriert und der Restgehalt an Farbstoff im Filtrat colorimetrisch bestimmt. Es befanden sich noch 10% des eingesetzten Farbstoffes im Filtrat.

b) Um eine schnellere Sedimentation der Verlackungsprodukte zu erreichen, wurde die gemäss Beispiel 2 erhaltene Suspension mit 2 mg eines handelsüblichen hochmolekularen kationischen Polyacrylamids versetzt. 5 Minuten nach Zugabe des Flockungsmittels konnten die Verlackungsprodukte abfiltriert werden.

Vergleichsbeispiel 1

Wiederholt man das Beispiel 1a) mit der Ausnahme, dass man das Hilfsmittel 1 nicht einsetzt, so findet man im Filtrat 88% des eingesetzten Farbstoffs.

Vergleichsbeispiel 2

Wiederholt man das Beispiel 1b) mit der Ausnahme, dass man in Abwesenheit des Hilfsmittels 1 und in Abwesenheit des kationischen Polyacrylamids arbeitet, so findet man im Filtrat 92% des eingesetzten Farbstoffs.

Vergleichsbeispiel 3

Wiederholt man das Beispiel 1a) mit der Ausnahme, dass man anstelle des Hilfsmittels 1 dessen nichtbenzylierte Vorstufe, d.h. Polyethylenimin des Molekulargewichts 1500 in gleicher Menge einsetzt, so findet man 56% des ursprünglich eingesetzten Farbstoffs im Filtrat.

Beispiel 3

Das Beispiel 1a) wurde mehrfach wiederholt, jedoch wurden bei jeder Wiederholung anstelle von 100 mg des Hilfsmittels 1 die in Tabelle 1 angegebenen Hilfsmittel in den dort ebenfalls angegebenen Mengen eingesetzt. Der Restgehalt an Farbstoff im Filtrat ist ebenfalls in Tabelle 1 angegeben.

Tabelle 1

| Hilfsmittel Nr. | zugesetzte Menge an Hilfsmittel (mg) | % Farbstoff im Filtrat, bezogen auf eingesetzten Farbstoff |
|---|---|---|
| 1 | 10 | 44 |
| | 25 | 28 |
| | 50 | 15 |
| | 200 | 3.2 |
| 2 | 10 | 40 |
| | 25 | 26 |
| | 50 | 17 |
| | 100 | 7.3 |
| | 200 | 4.2 |
| 3 | 10 | 59 |
| | 25 | 32 |
| | 50 | 18 |
| | 100 | 9.6 |
| | 200 | 2.8 |
| 4 | 10 | 35 |
| | 25 | 26 |
| | 50 | 14 |
| | 100 | 7.9 |
| | 200 | 5.3 |
| 5 | 100 | 6.8 |
| 6 | 100 | 7.2 |
| 7 | 100 | 9.2 |
| 8 | 100 | 6.8 |
| 12 | 100 | 7.8 |
| 13 | 100 | 6.9 |
| 14 | 100 | 8.3 |
| 15 | 100 | 7.4 |
| 16 | 100 | 6.3 |

Vergleichsbeispiel 4

Das Beispiel 1a) wurde mehrfach mit der Ausnahme wiederholt, dass jeweils anstelle des Hilfsmittels 1 die in Tabelle 2 angegebenen nichtbenzylierten Hilfsmittel in den dort ebenfalls angegebenen Mengen eingesetzt wurden. Wie aus der Tabelle 2 hervorgeht, enthielt das Filtrat dann jedoch deutlich höhere Restgehalte an Farbstoffen.

Tabelle 2

| Hilfsmittel Nr. | zugesetzte Menge an Hilfsmittel (mg) | % Farbstoff im Filtrat, bezogen auf eingesetzten Farbstoff (%) |
|---|---|---|
| 1a | 10 | 86 |
| | 25 | 80 |
| | 50 | 71 |
| | 200 | 43 |
| 3a | 10 | 90 |
| | 25 | 73 |
| | 50 | 61 |
| | 100 | 53 |
| | 200 | 52 |
| 4a | 10 | 95 |
| | 25 | 88 |
| | 50 | 75 |
| | 100 | 63 |
| | 200 | 48 |
| 5a | 10 | 93 |
| | 25 | 88 |
| | 50 | 82 |
| | 100 | 66 |
| | 200 | 53 |
| 7a | 100 | 85 |
| 12a | 100 | 81 |

Beispiel 4

Das Beispiel 1a) wurde mit der Ausnahme wiederholt, dass anstelle des sauren Orangefarbstoffs CI 15 510 100 mg des roten Direktfarbstoffs CI 28 160 verwendet wurde. Das Filtrat enthielt in diesem Fall 1,2% des eingesetzten Farbstoffs.

Vergleichsbeispiel 5

Das Beispiel 4 wurde wiederholt, jedoch setzte man anstelle des Hilfsmittels 1 das nichtbenzylierte Hilfsmittel 1a) (Polyethylenimin) ein. In diesem Fall enthielt das Filtrat 8,8% des eingesetzten Farbstoffs.

Beispiel 5

Zu einer Lösung von 30 mg des sauren Orangefarbstoffs CI 15 510 in einem Liter destilliertem Wasser gab man 300 mg eines feingemahlenen Aluminiumsilikats (China-Clay), setzte anschliessend 200 mg Aluminiumsulfat ($Al_2(SO_4)_3 \cdot 18H_2O$) und 100 mg des Hilfsmittels 1 zu. Nach 10minütigem Stehen filtrierte man die Verlakkungsprodukte ab. Im Filtrat befanden sich 6,5% des eingesetzten Farbstoffs.

Beispiel 6

Das Beispiel 5 wurde mit der Ausnahme wiederhohlt, dass man in Abwesenheit von Aluminiumsilikat arbeitete. Man erhielt einen sehr flockigen, leicht filtrierbaren Niederschlag. Das Filtrat enthielt 11% des eingesetzten Farbstoffs.

Beispiel 7

Zu einer Lösung von 100 mg des roten Direktfarbstoffs CI 28 160 in einem Liter destilliertem Wasser gab man jeweils 100 mg des Hilfsmittels 1 und jeweils 300 mg der in Tabelle 3 angegebenen mineralischen Adsorbentien und, wie aus der Tabelle hervorgeht, einmal in Abwesenheit und einmal in Anwesenheit von 100 mg Aluminiumsulfat. In der Tabelle 3 sind die Variationen und die jeweils erhaltenen Restgehalte an Farbstoff im Filtrat angegeben.

Tabelle 3

| Eingesetztes mineralisches Adsorbens | Zusatz von Aluminiumsulfat (100 mg) | % Farbstoff im Filtrat, bezogen auf eingesetzten Farbstoff |
|---|---|---|
| Montmorillonit | + | 1.2 |
| Montmorillonit | − | 10.2 |
| China Clay X1 (Al-Silikat) | + | 5.1 |
| China Clay X1 (Al-Silikat) | − | 37 |
| Titandioxid | + | 15 |
| Titandioxid | − | 39 |
| Talkum | + | 6.4 |
| Talkum | − | 37 |
| Tonerde | + | 4.3 |
| Tonerde | − | 14 |
| Satinweiss (Calcium-Sulfo-Aluminat) | + | 8.6 |
| Satinweiss (Calcium-Sulfo-Aluminat) | − | 27 |
| Kreide ($CaCO_3$) | + | 10 |
| Kreide ($CaCO_3$) | − | 36 |

**Beispiel 8**

Die Beispiele 1 bis 7 wurden wiederholt, jedoch wurden anstelle der feingemahlenen mineralischen Adsorbentien wässrige Aufschlämmungen der in den Beispielen jeweils genannten Adsorbentien verwendet, die bereits mit den in den Beispielen 1 bis 7 angegebenen Hilfsmitteln vor der Zugabe zum gefärbten Wasser gemischt waren. In allen Fällen wurde praktisch die gleiche Wirksamkeit erhalten wie bei einer getrennten Zugabe von mineralischen Absorbens und Hilfsmittel.

**Beispiel 9**

Das Beispiel 8 wurde wiederholt, jedoch wurde die Mischung aus mineralischem Adsorbens und dem jeweils verwendeten Hilfsmittel einem Mahl- oder Knetvorgang unterworfen. Die Mischung wurde erst danach zur Entfernung der Farbstoffe aus dem Wasser eingesetzt. Man gelangte zu praktisch den gleichen Ergebnissen wie bei den Beispielen 1 bis 7.

**Vergleichsbeispiel 6**

Das Beispiel 1 wurde mehrfach wiederholt, jedoch setzte man anstelle von 100 mg des Hilfsmittels 1 jeweils 100 mg der Hilfsmittel 9, 10 und 11 ein, für deren Alkylierung Alkylierungsmittel eingesetzt wurden, die keinen aromatischen Substituenten enthielten. Hierbei enthielt das Filtrat deutlich höhere Werte an restlichem Farbstoff.

Tabelle 4

| Hilfsmittel Nr. | % Farbstoff im Filtrat, bezogen auf eingesetzten Farbstoff |
|---|---|
| 9 | 54 |
| 10 | 57 |
| 11 | 61 |

In den folgenden Beispielen wird gezeigt, dass durch die Anwendung des erfindungsgemässen Verfahrens der störende Einfluss von Humussäure und anderen anionischen Substanzen auf die Entwässerungsgeschwindigkeit unter Verwendung handelsüblicher Entwässerungshilfsmittel vermindert oder sogar völlig aufgehoben werden kann.

**Beispiel 10**

a) 1000 ml eines Zeitungspapierstoffs mit einer Konsistenz von 2 g/l werden auf das Sieb eines Schopper-Riegler-Mahlgrad-Prüfers gegossen. Die für den Durchtritt von 700 ml Flüssigkeit durch das Sieb benötigte Zeit wird gemessen.

b) Dem unter a) angegebenen Stoffmodell werden 0,2% eines handelsüblichen Entwässerungsmittels zugesetzt (Polyamidoamin, gepfropft mit Ethylenimin und vernetzt).

c) Stoffmodell wie a), jedoch zusätzlich 5 mg Humussäure in 100 ml Wasser.

d) Stoffmodell wie c), jedoch zusätzlich 0,2% Entwässerungshilfsmittel.

e) Stoffmodell wie c), jedoch zusätzlich 10 mg Bentonit, 10 mg Hilfsmittel 1 und 10 mg Alaun.

f) Stoffmodell wie e), jedoch zusätzlich 0,2% Entwässerungshilfsmittel.

Die Ergebnisse der Entwässerungsgeschwindigkeit sind jeweils in der Tabelle 5 zusammengestellt. Der Versuch f) zeigt, dass die volle Wirksamkeit des Entwässerungshilfsmittels wieder erhalten wird, sofern das erfindungsgemässe Verfahren angewendet wird.

Tabelle 5

| Stoff-modell | Entwässerungsgeschindigkeit in Abwesenheit eines Entwässerungshilfsmittels [sec] | in Gegenwart von 0,2% Entwässerungshilfsmittels [sec] |
|---|---|---|
| a | 95 | 66 |
| b | | |
| c | 101 | 100 |
| d | | |
| e | 101 | 60 |
| f | | |

**Beispiel 11**

Die Entwässerungszeit eines Zeitungspapierstoffs wird wie in Beispiel 10 bestimmt. Als anionische Substanz, die die Wirkung des kationischen Entwässerungshilfsmittels stört, wurden 100 ml eines Heisswasserextraktes von Fichtenholz, wie er beim Schleifen des Holzes entsteht, zugegeben. Ein solcher Extrakt stört bekanntlich die Wirksamkeit von Entwässerungshilfsmitteln bei der Papierherstellung. Die Einsatzstoffe und die erhaltenen Entwässerungszeiten sind in Tabelle 6 angegeben. Aus der Tabelle wird ersichtlich, dass es mit Hilfe des erfindungsgemässen Verfahrens möglich ist, einen Teil der Wirksamkeit des Entwässerungshilfsmittels wieder zurückzugewinnen.

Tabelle 6

| | | Entwässerungsgeschwindigkeit [sec] ohne Entwässerungshilfsmittel | in Gegenwart von 0,2% eines handelsüblichen Entwässerungshilfsmittels |
|---|---|---|---|
| a | Papierstoff + 100 ml Wasser | 95 | 66 |
| b | Papierstoff wie a) +100 ml Holzextrakt | 121 | 113 |
| c | wie b + 10 mg Bentonit + 10 mg Alaun | 114 | 111 |
| d | wie c + 10 mg Hilfsmittel 1 | 118 | 90 |

**Patentansprüche**

1. Verfahren zur Entfernung von anionischen Verbindungen aus Wasser, das bei Fabrikationsprozessen im Kreislauf geführt wird, und aus Abwässern durch Zusatz von kationischen polymeren Hilfsmitteln unter Bildung und Ausflockung von wasserunlöslichen Reaktionsprodukten, dadurch gekennzeichnet, dass man als kationische polymere Hilfsmittel wasserlösliche Umsetzungsprodukte verwendet, die durch Reaktion von Benzylchlorid oder Styroloxid mit einem Polyelektrolyten aus der Gruppe Polyethylenimin, Polyvinylaminen oder Reaktionsprodukten aus Ammoniak oder Aminen und 1,2-Dichlorethan, Epichlorhydrin, Dichlorhydrinether oder Chlorhydrinether von mindestens zweiwertigen Alkoholen erhältlich und bei denen mindestens 10% der Aminoalkylgruppen des kationischen Polyelektrolyten mit den einen aromatischen Substituenten enthaltenden Alkylierungsmitteln umgesetzt sind, und sie in Kombination mit mineralischen Adsorbentien und/oder einem Magnesium-, Aluminium- oder Eisensalz verwendet.

2. Verfahren nach Anspruch 1, dadurch gekennzeichnet, dass die wasserlöslichen Umsetzungsprodukte in einer zweiten Stufe durch Umsetzung mit Cyanamid und/oder Dicyandiamid modifiziert werden.

**Revendications**

1. Procédé pour l'élimination de composés anioniques de l'eau qui, dans certains procédés de préparation, circule en circuit fermé, et d'eaux résiduaires par addition d'additifs polymères cationiques et formation de produits réactionnels insolubles dans l'eau, qui se séparent par floculation, caractérisé en ce que l'on emploie comme additifs polymères cationiques des produits hydrosolubles de la réaction du chlorure de benzoyle ou de l'oxyde de styrène avec un poly-électrolyte choisi parmi la poly-éthylène-imine, les poly(amines vinyliques) et les produits de la réaction de l'ammoniac ou d'amines et du dichlor-1,2 éthane, de l'épichlorhydrine, d'un éther de dichlorhydrine ou d'un éther de chlorhydrine d'alcools au moins bivalents et dont au moins 10% des groupes amino-alkyle du poly-électrolyte cationique ont réagi avec les agents d'alcoylation à substituant aromatique, ces additifs étant mis en œuvre en combinaison avec des adsorbants minéraux et(ou) un sel de magnésium, d'aluminium ou de fer.

2. Procédé suivant la revendication 1, caractérisé en ce que les produits réactionnels hydrosolubles sont modifiés dans un deuxième stade par une réaction avec du cyanamide et(ou) du dicyan-diamide.

## Claims

1. A process for removing anionic compounds from water which is recycled in manufacturing processes, and from waste water, by adding cationic polymeric assistants, with the formation and flocculation of water-insoluble reaction products, wherein there are used as cationic polymeric assistants water-soluble products which are obtainable by reacting benzyl chloride or styrene oxide with a polyelectrolyte selected from the group consisting of polyethyleneimines, polyvinylamines, and reaction products of ammonia or amines with 1,2-dichloroethane, epichlorohydrin, dichlorohydrin ethers or chlorohydrin ethers of dihydric or polyhydric alcohols, and in which at least 10% of the aminoalkyl groups of the cationic polyelectrolyte are reacted with the alkylating agents containing an aromatic substituent, and the cationic polymeric assistants are employed in combination with mineral adsorbents and/or a magnesium, aluminium or iron salt.

2. A process as claimed in claim 1, wherein the water-soluble reaction products are modified, in a second stage, by reaction with cyanamide and/or dicyandiamide.